(19) Europäisches Patentamt
European Patent Office
Office européen des brevets

(11) **EP 3 370 182 B1**

(12) **EUROPEAN PATENT SPECIFICATION**

(45) Date of publication and mention of the grant of the patent:
**19.01.2022 Bulletin 2022/03**

(21) Application number: **17158939.3**

(22) Date of filing: **02.03.2017**

(51) International Patent Classification (IPC):
*G06F 21/31* (2013.01)     *G06F 21/83* (2013.01)

(52) Cooperative Patent Classification (CPC):
**G06F 21/316; G06F 21/83**

(54) **METHOD AND APPARATUS FOR SECURE DATA ENTRY**

VERFAHREN UND VORRICHTUNG ZUR SICHEREN DATENEINGABE

PROCÉDÉ ET APPAREIL DE SAISIE DE DONNÉES SÉCURISÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.09.2018 Bulletin 2018/36**

(73) Proprietor: **Electronic Trade Solutions Ltd Dublin 2 (IE)**

(72) Inventors:
• **Mievis, August**
**3440 Zoutleeuw (BE)**
• **McEvoy, David**
**Sai Kong, N.T. (HK)**
• **Neil McEvoy**
**Dublin 18 (IE)**

(74) Representative: **Tomkins & Co**
**5 Dartmouth Road**
**Dublin 6 (IE)**

(56) References cited:
**US-A1- 2014 215 632     US-A1- 2015 213 246**
**US-B1- 6 630 928**

EP 3 370 182 B1

## Description

## Technical Field

The invention relates to secure data entry and in particular secure data entry for a touchpanel display having a virtual keypad.

## Background Art

In a current configuration payment terminals include an installed base having a physical keypad. This physical keypad includes a plurality of mechanical switches and or capacitive switches which are activated in response to a user entering confidential information. Such confidential information may include a personal identification number, PIN, financial account data, payment card related data and the like. However with developments in technology there is a move towards virtual keypad layouts where the keypad layout is displayed on a Touch Panel (TP) liquid crystal display (LCD). PIN entry on terminal TP LCD glass comes with its own complications and potential security threats. In addition any security solution needs to meet the requirements of industry certification, (for example Payment Cart Industry (PCI) PIN Transaction Security (PTS) & Secure Reading and Exchange of Data (SRED) certification) for implementation further complicating the implementation of security protocols for virtual keypad layouts. With these keypads there is a requirement that all security related firmware is exclusively operational in a secure mode, such as a Trusted Execution Environment (TEE). Third party applications however are run in an open mode and without restrictions. In this open mode, all application related firmware is executed. The application firmware must be freely programmable by customers, independent of secure mode functionality and without a need for the certification listed above. The TEE interface between the open mode and the secure mode is available and used to execute all secure functions within the terminal, such as, but not limited to - crypto calculations, PIN entry and Smart Card Reader (SCR) chip transactions. It is important to note that the LCD display is controlled from open mode and therefore there is no development limitation on the open firmware content.

When considering a terminal with payment features it is essential that hackers cannot retrieve sensitive data from accessible signals. Current implementations include using a secure box construction around the security components and interface signals, and protecting Ball Grid Array (BGA) components on the printed circuit board (PCB) with mesh layers. In such a tamper responsive protection situation no additional hardware related protection is required as the LCD/TP accessible signals on the interface connectors are located inside the secure box. However with the open mode firmware having full control of the LCD interface there is a need to implement additional security to avoid a hacker obtaining access to secure data, for example PIN data. This may happen, for example where a "fake" screen showing a virtual keypad with PIN entry instructions is downloaded. Existing solutions enforce a secure TP display using only signed LCD screen shots, however this technique does not meet the required standards of allowing full access in open mode. The use of signed screenshots limits the freedom of a user designing their own graphical user interface in open mode. It is therefore desirous to provide a solution to the security problem outlined above. The present invention solves this problem by implementing firmware security measures monitoring the TP LCD usage thus removing the need for the use of signed LCD screenshots.

US 2015/213246A1 discloses a method for confirming identity of a user by comparing extracted user characteristics.

## Summary of invention

The invention as described herein with reference to the appended claims is directed to a method for secure data entry on an interface of a terminal, the method comprising: receiving a position of an interaction with the interface; determining whether secure data is present in an area around the position; assessing a number of interactions, n previous to the current interaction for secure data; and if secure data is present in the area and n interactions preceding the user interaction comprises secure data, asserting that the user interaction comprises a security threat.

The method provides for a simple yet effective way of determining whether a security threat exists without any impact to third party developers developing third party applications without restrictions.

With these keypads there is a requirement that all security related firmware is exclusively operational in a secure mode, such as a Trusted Execution Environment (TEE). Third party applications however are run in open mode and without restrictions. In this open mode, all application related firmware is executed.

Secure data may include any private data for example any part of a PIN number, password or other access code. N may be a number of digits in a PIN number and n may be equal to N-1.

The terminal may be configurable to operate in a secure mode or an open mode and wherein determining whether secure data is present, assessing the number of interactions and asserting that the user interaction may comprise a security threat occurs when the terminal is in a secure mode.

The secure mode may be a Trusted Execution Environment, TEE and/or wherein the open mode may be a Rich Execution Environment, REE.

Asserting that the user interaction comprises a security threat may comprise discarding (105) the position of the user interaction and/or sending (106) an alert from the secure mode to the open mode.

If no secure data is present in the area around the position or if n previous interactions comprises no secure data the method may comprise passing the position from the secure mode to the open mode.

The method described above may further comprise prior to determining whether secure data is present in the area around the position determining whether a threat is possible.

If secure data is present in the area around the position the method may comprise incrementing a counter value and wherein assessing the number of interactions may comprise reading said counter value.

The method may further comprise resetting the counter value if no secure data is present in the area around the position or a security threat is asserted.

Assessing a number of interactions previous to the current interaction may comprise comparing the counter value to a threshold, said threshold equal to n.

Determining whether a threat is possible may comprise determining whether the counter value is greater than or equal to n.

If the counter value is less than n the method may comprise passing the position from the secure mode to the open mode.

N may be equal to a number of digits in a personal identification number and n may be equal to N-1.

Determining whether secure data is present in the area around the position may comprise: performing intelligent character recognition on said area.

The interface display may comprise a touch-pad enabled display.

Data may comprises alphanumeric data.

A further embodiment of the present invention includes an apparatus for secure data entry on an interface of a terminal, the apparatus comprising:means for receiving a position of a user interaction with the interface; means for determining whether secure data is present in an area around the position; means for assessing a number of interactions, n previous to the current interaction for secure data; and means for asserting that the user interaction comprises a security threat if secure data is present in the area and n interactions preceding the user interaction comprises secure data.

The terminal may be configurable to operate in a secure mode or an open mode and wherein determining whether secure data is present, assessing the number of interactions and asserting that the user interaction comprises a security threat may occur when the terminal is in a secure mode.

The secure mode may be a TEE and/or wherein the open mode is an REE.

Means for asserting that the user interaction comprises a security threat comprises means for discarding (105) the position of the user interaction and/or sending (106) an alert from the secure mode to the open mode.

The apparatus may comprise means for passing the position from the secure mode to the open mode if no secure data is present in the area around the position or if n previous interactions comprises no secure data.

The apparatus may further comprise means for determining whether a threat is possible.

If secure data is present in the area around the position the apparatus may comprise means for incrementing a counter value and wherein assessing the number of interactions comprises reading said counter value.

The apparatus may further comprise means for resetting the counter value if no secure data is present in the area around the position or a security threat is asserted.

Means for assessing a number of interactions previous to the current interaction may comprise means for comparing the counter value to a threshold, said threshold equal to n.

Means for determining whether a threat is possible may comprise means for determining whether the counter value is greater than or equal to n.

If the counter value is less than n the apparatus may comprise means for passing the position from the secure mode to the open mode.

N may be equal to a number of digits in a personal identification number and n may be equal to N-1.

Means for determining whether secure data is present in the area around the position may comprise: means for performing intelligent character recognition on said area.

The interface may comprise a touch-pad enabled display.

Data may comprise alphanumeric data.

There is also provided a computer program comprising program instructions for causing a computer program to carry out the above method which may be embodied on a record medium, carrier signal or read-only memory.

**Brief description of drawings**

The invention will be more clearly understood from the following description of an embodiment thereof, given by way of example only, with reference to the accompanying drawings, in which:

Fig. 1 represents the trusted execution environment Client API System Architecture
Fig. 2 is a flow chart depicting a method of implementing an embodiment of the present invention
Fig. 3 is a depiction of an area around an interaction in accordance with the present invention
Fig. 4 is an expansion of the method of implementing the embodiment of Fig.2
Fig. 5 is a representation of an LCD with integrated touch pad in accordance with the present invention.

**Description of embodiments**

While described herein in relation to payment terminals with all numeric data and in particular PIN entry on a terminal TP LCD glass where numeric data entry is facilitated through engagement with the displayed fields on the LCD the present embodiments have broader applicability for example in User Identification for physical and logical access control, administrative purposes, document signing, Point of Sale terminals, Industrial control systems, consumer electronics, medical devices, entrance and exit security for buildings and anywhere touchpanel displays for secure data entry can be implemented. While, for purposes of simplicity of explanation, the methodology is shown and described as a series of acts, it is to be understood and appreciated that the methodology is not limited by the order of acts, as some acts may, in accordance with one or more embodiments, occur in different orders and/or concurrently with other acts from that shown and described herein. For example, it is to be appreciated that a methodology could alternatively be represented as a series of interrelated states or events, such as in a state diagram. Moreover, not all illustrated acts may be required to implement a methodology in accordance with one or more embodiments.

Bearing in mind the restrictions outlined above, the present invention introduces additional processing of interactions with the interface of a terminal. In an embodiment this is implemented by the introduction of a software layer in the trusted execution environment. This layer processes displayed data in a region around a touch panel interaction or input and processes the data accordingly. Processing of data associated with the interaction is implemented exclusively in this secure mode or trusted execution environment. It will be appreciated that the controlling firmware for the touch panel is located in the secure mode and that the touch panel interface/port/driver cannot be accessed or taken over by the open mode. Accordingly the functionality is protected from user interaction separate from open mode processing.

The methods described below diverge from regular PIN entry in that regular pin entry occurs in the secure or trusted execution environment. In regular pin entry the information entered is used exclusively by a PIN entry algorithm. Outside regular PIN entry position data associated with an interaction with the touch screen is routinely outputted to the open mode.

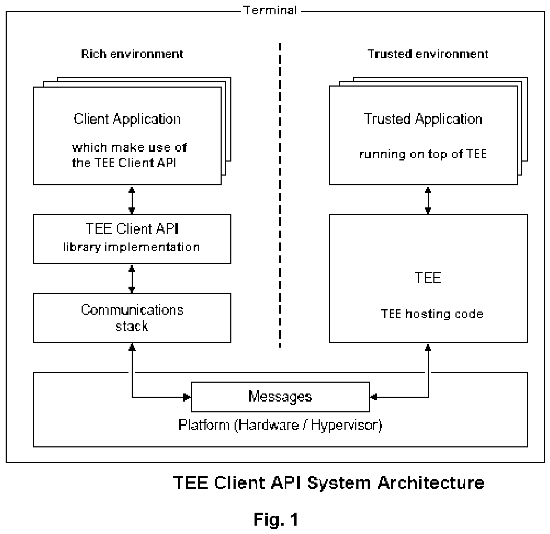

Terminal software platforms consist of client applications running in a Rich Execution Environment (REE - open mode) and security related Trusted Applications are run inside a Trusted Execution Environment (TEE). The relationship between major system components as documented by Global Platform is shown in Fig. 1. Within the trusted environment there are two distinct components; a component that hosts the code of the TEE itself and the trusted applications which run on top of it. Within the rich environment the client applications use the TEE Client API, the TEE Client API library implementation and the communications stack which is shared amongst all client applications and whose role is to handle the communications between the REE and the TEE. As indicated in Fig. 1, information is routinely passed or outputted between the REE and the TEE via a platform such as the hardware platform shown in Fig. 1 (Global Platform Device Technology TEE Client API Specification Version 1.0 July 2010 Document Reference: GPD_SPE_007).

An interaction with an interface includes any interaction with an interface such as a touch panel display or alternative interface controlled or driven by human touch or any point and click device such as a mouse or a stylus, a touch pad and the like. Additionally, a user interaction may include direct contact with the interface or a hovering user interaction with an interface such as a touch panel display, or alternative interface. The interface may include but not restricted to capacitive/resistive/ultrasonic (surface acoustic wave), infrared, optical, dispersive signal technology or acoustic pulse recognition touch panel interfaces.

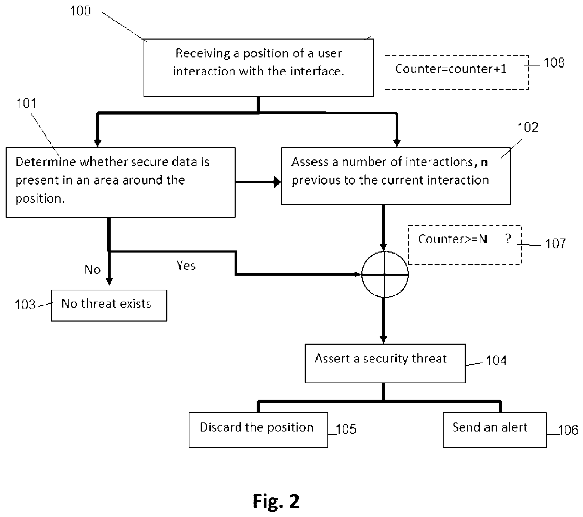

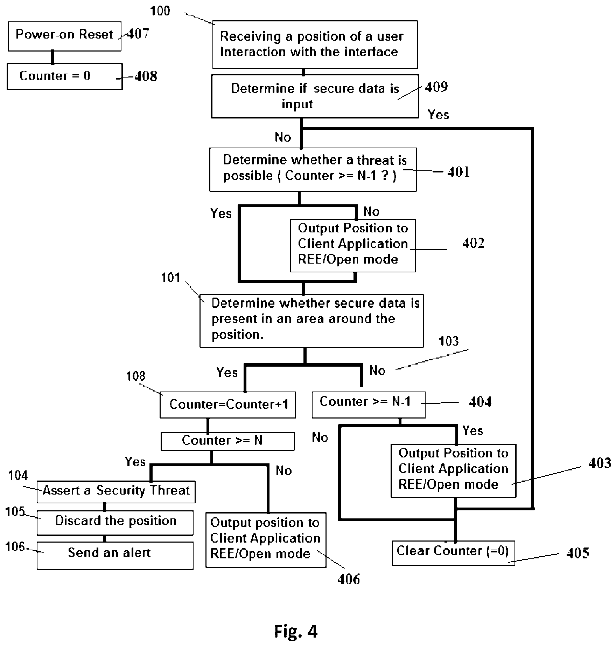

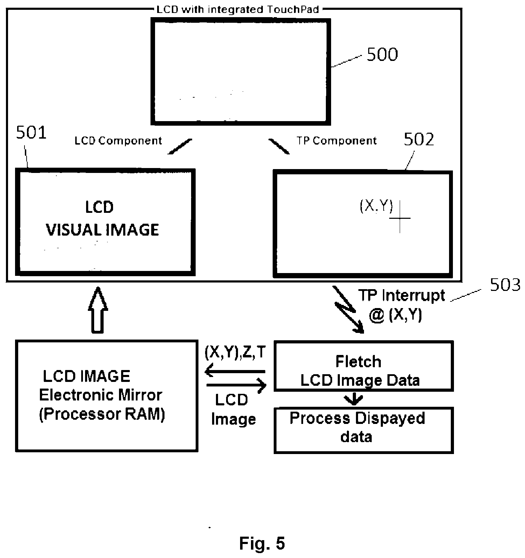

Each interaction with the touch panel interface has a position or location associated therewith. This interaction can be described using coordinates as outlined below. As outlined in Fig. 2 and Fig. 4 the position of the interaction with the interface is received, 100, by a module configured to execute the processes described herein. The position may include position data for example x, y coordinates or indeed x, y and z coordinates where a hovering interaction is detected. The module may be included as a component of the touch panel hardware. This module is configured to provide a mechanism to detect if the screen has been touched or interacted with. In response to a detected touch an interrupt is sent to the touch panel processor to indicate a touch down event has occurred and a touch panel memory (for example a touch panel FIFO has data available. Executing the interrupt, the touch panel driver software, which is located in the TEE takes each stable reading and converts the raw data to pixel coordinates. This may be implemented using simple linear interpolation. The pixel coordinates are processed by the firmware security measures monitoring the TP LCD usage. As outlined in Fig. 5 where an LCD 500 with an integrated touch pad is provided there are two separated components; the LCD component 501 and the TP component 502. In response to a detected touch, an interrupt 503 is sent to the touch panel processor to indicate a touch down event has occurred and a touch panel memory (for example a touch panel FIFO has data available). Following the interrupt the data is processed in accordance with the methods outlined in Fig. 2 or 4 wherein a counter is used to record the number of consecutive touch down events.

It should be noted that when executing a secure data input firmware resident in the TEE no security threat will exist as the secure firmware will never output secure data which is not protected by encryption. The counter of Fig. 4 will then be cleared, for example to zero.

When executing open mode firmware a different threat potential exists.

Considering the arrangement of Fig. 4 when the counter value is less than N-1, where N is a number of digits in a Personal Input Number, PIN for example, there is no security threat and the position is output (step 402) prior to the required checking as to whether secure data is present in the area around the TP position (101).

Following a check to determine whether secure data is present in the area around the TP position the counter may be cleared to zero and the TP position output if this has not already happened (step 403, 405).

If secure data is present the counter value is incremented (step 108).

If the counter value is less than N then there is no security threat and the TP position may be passed from the secure mode to the open mode (step 406).

If the counter value is greater than or equal to N then there is a security threat and a security threat is asserted as described below (steps 104, 105, 106).

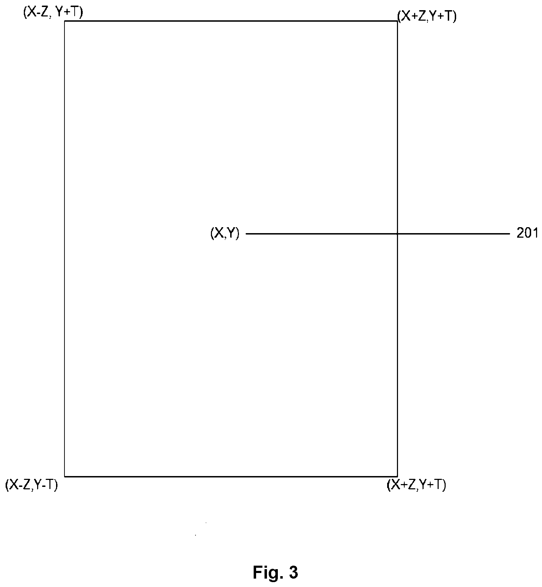

During an interaction with a touch panel, the image displayed on a touch panel LCD is a mirror of electronic stored data containing presence and assigned colour information for each pixel of the image. A touch panel controller reports a (X,Y) 201, position of an interaction with the interface as shown in Fig. 3.

An area is defined around the position of the interface. As shown in Fig. 3 this area is defined by (X-Z,Y+T) (X-Z,Y-T), (X+Z,Y+T) (X+Z,Y-T).

The Z and T values are dependent on the display size.

For example, the maximum LCD area to check is ¼ of the LCD active height x ¼ of the LCD active width. A standard PIN Keypad layout has 16 switches arranged in a 4x4 layout matrix. When covering the full screen surface, the area to be defined is maximum ¼ of the used LCD active area size in each direction.

On a TP LCD with an interaction at position (X,Y) consider the

$$(X-Z,Y+T) \leftrightarrow (X+Z,Y+T)$$
$$\updownarrow$$
$$(X-Z,Y-T) \leftrightarrow (X+Z,Y-T) \text{ area.}$$

As an example, consider a 4,3" LCD, the active area is 95x54 mm (WxH) or 480 x 270 pixels. While described as a 4,3" LCD it will be appreciated that the present invention is not restricted as such an any LCD screen size may be used.

Keeping the display in a horizontal/landscape orientation:

2Z = 54/4 mm = 13.5 mm or 270/4= 67 pixels.

2T = 95/4 mm = 23.75 mm or 480/4= 120 pixels.

Keeping the display in a vertical/portrait orientation:

2Z = 95/4 mm = 23.75 mm or 480/4= 120 pixels.

2T = 54/4 mm = 13.5 mm or 270/4= 67 pixels.

It will be appreciated that the displayed security sensitive character needs to stay readable and as per expected to the user. For this a minimum size is assumed to be a minimum size height of one fourth of the checked box area. For the 4,3" LCD size, security sensitive character height = 13.5/4 mm = 3.375 mm with minimal line thickness of 0.3 mm.

As outlined in Fig.2 and 4 a determination (101) is made as to whether secure data is present in the defined area. This determination includes assessing whether any security sensitive data is present in the defined area. Security sensitive data includes numeric data characters, 0 to 9 as used for PIN entry or Alpha (alphabet lower/upper case) characters. Optionally special characters may also be used to allow for more complex secret data construction (some secure apps require minimum 1 numeric, 1 alpha lower case, one alpha upper case and one special character in pass phrases, etc.).

The determination may be performed using intelligent character recognition (ICR) on the area. ICR is the computer translation of hand printed and written characters. The area image is analyzed and the content is compared against a list of predefined sensitive data characters. ICR is required as Optical Character Recognition (OCR) is achieved from printed text of a particular font. It will be appreciated that this other methods of character recognition may also be used. If no secure data is present in the area then it is determined that no threat exists (step 103 of Fig 2). When no threat exists the data is passed between the secure mode and the open mode and displayed to the user.

The present application relies on maintaining a record of a number of consecutive interactions which contain secure data. As outlined in Fig. 2 a number of interactions n or N-1 previous to the current interaction are assessed for secure data.

A number of interactions previous to the current interaction are assessed (102) to determine whether previous transactions also included secure data. Details of previous transactions may be stored and retrieved from memory. This facilitates in the determination of the number of consecutive interactions which have secure data associated therewith. This may also be implemented using a counter as outlined in relation to Fig. 4. Alternatively a database construct may be used to record whether or not previous interactions have secure data associated therewith.

If secure data is present, further analysis of the data is implemented. The number of previous interactions may be compared to a threshold n where n=N-1. For example in Fig. 2 N may be related to the number of digits in a PIN number. In the described embodiment N would be equal to (the number of digits in the PIN, N, minus 1.) For example with a four digit pin n would be equal to 3. If the current interaction and N-1 previous interactions all include secure data then a security threat is asserted. As shown in Fig. 2, optionally a counter is used. If the counter is equal to 4, (107) and there is secure data, then a security threat is asserted. Asserting a threat includes for example discarding the data (105) associated with the current interaction and/or sending an alert (106) from the secure mode to the open mode. Such an alert may include sending an error message coded as an agreed and not feasible to reach TP position value.

As outlined above Fig. 4 is an expansion of the teaching of the embodiment of Fig. 2. Following the receipt of position of a user interaction with the interface, step 100, a determination is made as to whether secure data is input (409). When executing a secure data input firmware resident in the TEE, there is no security threat as the secure firmware will never output secure data in clear (not protected by encryption) and the counter value is cleared to zero.

If no secure data is detected then there is a need to determine whether any threat exists, as there is a danger that data could be inadvertently output and this data maybe possibly secure and output to a hacker or the like.

Step 401 of Fig. 4 determines whether a threat is possible. As outlined above the present invention maintains a record of previous interactions containing secure data. In the embodiment of Fig. 4 this is implemented using a counter. The counter value is compared to a threshold. In this instance the threshold is equal to n or N-1. In the embodiment of Fig. 4, N may be equal to the number of digits in a PIN, for example 4. A security threat will only be possible where the counter is greater than or equal to N-1 (e.g. 3, where N=4). By eliminating the determination of whether secure data is present in an area around the position processing efficiencies are obtained. Only where there is a risk of a threat is processing carried out.

If no threat is possible then the position data is output from the secure mode to the open mode as in step 402.

If a threat is possible then as in Fig. 2 the determination is made at step 101 as to whether secure data is present in an area around the position.

As an expansion of the teaching of Fig. 2, where no secure data exists and no threat exists steps 403, 404, 405 and 406 may be implemented.

In step 404 it is determined whether the counter is greater than or equal to N-1, for example 3 If it has been previously determined that a threat is possible but no secure data is present in an area around the position then the position data is output from the secure mode to the open mode in step 403.

Where it has been determined that secure data is present in an area around the position, the counter is incremented. If the counter is greater than or equal to N, for example 4 where there is a four digit PIN then it is indicative of the situation where the current interaction and n previous interactions all include secure data then a security threat is asserted as outlined in Fig. 2. Asserting a threat includes for example discarding the data, 105 associated with the current interaction or sending an alert, 106 from the secure mode to the open mode.

Otherwise if the counter is smaller than N then no threat exists and the position data can be output from the secure mode to the open mode.

It will be noted that initially on power up or power reset of the terminal the counter is set to zero.

The embodiment of Fig. 4 simplifies the determination of a security threat. Only a counter value needs to be checked to facilitate recognition of the security threat.

The words "comprises/comprising" and the words "having/including" when used herein with reference to the present invention are used to specify the presence of stated features, integers, steps or components but does not preclude the presence or addition of one or more other features, integers, steps, components or groups thereof. It is appreciated that certain features of the invention, which are for clarity, described in the context of separate embodiments, may also be provided in combination in a single embodiment. Conversely, various features of the invention which are, for brevity described in the context of a single embodiment, may also be provided separately or in any suitable combination.

## Claims

1. A method for secure data entry by a user on a virtual keypad on a touch panel interface of a terminal, the terminal configured to operate in a secure mode and an open mode, the method comprising,

    receiving (100) a position of an user interaction with the interface;
    determining (409) whether secure data is input during the interaction by the user on the interface; wherein if it is determined that no secure data is input,
    comparing a counter to a threshold, N, the counter indicative of a number of interactions in a user transaction; wherein if the counter is greater than or equal to N-1, determining (401) that a security threat is possible;
    determining (101) whether secure data is present in an area around the position and if secure data is present, incrementing (108) the counter;
    comparing the counter to the threshold, N; and if the counter is greater than or equal to the threshold, N, asserting (104) a security threat and sending (106) an alert from the secure mode to the open mode.

2. The method of claim 1, wherein determining whether secure data is present incrementing a counter, comparing the counter to a threshold, and asserting that the user interaction comprises a security threat occur when the terminal is in a secure mode.

3. The method of claim 2, wherein the secure mode is a Trusted Execution Environment, TEE and/or wherein the open mode is a Rich Execution environment, REE.

4. The method to any of claims 2 or 3, wherein asserting that the user interaction comprises a security threat comprises discarding (105) the position of the user interaction.

5. The method of any of claims 2 to 4,

   wherein if no secure data is present in the area around the position or if the counter is less than the threshold, the method comprises passing the position from the secure mode to the open mode.

6. The method according to any previous claim further comprising resetting the counter value if no secure data is present in the area around the position or if a security threat is asserted.

7. The method according any previous claim, wherein the threshold is equal to a number of digits in a personal identification number.

8. The method of any previous claim, wherein determining whether secure data is present in the area around the position comprises: performing intelligent character recognition on said area.

9. A computer readable programming medium comprising instructions thereon which when executed by a processing module implements the method according to any of claims 1 to 8.

10. An apparatus for secure data entry on an interface of a terminal, the apparatus comprising: means for implementing the method according to any of claims 1 to 8.

**Patentansprüche**

1. Ein Verfahren zur sicheren Dateneintragung durch einen Nutzer auf einem virtuellen Keypad auf einer Touchpanel-Schnittstelle eines Terminals, wobei das Terminal konfiguriert ist in einem sicheren Modus und einem offenen Modus zu arbeiten, wobei das Verfahren Folgendes aufweist:

   Empfangen (100) einer Position einer Nutzerinteraktion mit der Schnittstelle;
   Bestimmen (409), ob sichere Daten während der Interaktion durch den Nutzer auf dem Interface eingegeben werden;
   wobei wenn bestimmt wird, dass keine sicheren Daten eingegeben werden, Vergleichen eines Zählers mit einem Schwellenwert, N, wobei der Zähler eine Anzahl von Interaktionen in einer Nutzertransaktion anzeigt;
   wobei wenn der Zähler größer oder gleich N-1 ist, Bestimmen (401), dass eine Sicherheitsbedrohung möglich ist;
Bestimmen (101) ob sichere Daten in einem Bereich um die Position herum präsent sind und wenn sichere Daten präsent sind,
Erhöhen (108) des Zählers;
Vergleichen des Zählers mit dem Schwellenwert, N; und
wenn der Zähler größer als oder gleich dem Schwellenwert, N, ist Feststellen (104) einer Sicherheitsbedrohung und Senden (106) einer Warnung von dem sicheren Modus zu dem offenen Modus.

2. Das Verfahren gemäß Anspruch 1, wobei Bestimmen ob sichere Daten präsent sind, Erhöhen eines Zählers, Vergleichen des Zählers mit einem Schwellenwert, und Feststellen, dass die Nutzerinteraktion eine Sicherheitsbedrohung aufweist auftreten, wenn das Terminal in einem sicheren Modus ist.

3. Das Verfahren gemäß Anspruch 2, wobei der sichere Modus eine vertrauenswürdige Anwendungsumgebung, TEE (TEE = Trusted Execution Enviroment), ist und/oder wobei der offene Modus eine Rich Anwendungsumgebung, REE (REE = Rich Execution Enviroment) ist.

4. Das Verfahren gemäß einem der Ansprüche 2 oder 3, wobei Bestimmen, dass die Nutzerinteraktion eine Sicherheitsbedrohung aufweist, Verwerfen (105) der Position der Nutzerinteraktion aufweist.

5. Das Verfahren gemäß einem der Ansprüche 2 bis 4, wobei, wenn keine sicheren Daten in dem Bereich um die Position herum präsent sind oder der Zähler weniger als der Schwellenwert ist, das Verfahren Weiterleiten der Position von dem sicheren Modus zu dem offenen Modus aufweist.

6. Das Verfahren gemäß einem der vorhergehenden Ansprüche, ferner aufweisend Zurücksetzen des Zähler-Werts, wenn keine sicheren Daten in dem Bereich um die Position herum präsent sind oder wenn eine Sicherheitsbedrohung festgestellt wird.

7. Das Verfahren gemäß einem der vorhergehenden Ansprüche, wobei der Schwellenwert gleich einer Anzahl von Stellen in einer persönlichen Identifikationsnummer ist.

8. Das Verfahren gemäß einem der vorhergehenden Ansprüche, wobei Bestimmen ob sichere Daten in dem Bereich um die Position herum präsent sind Folgendes aufweist: Durchführen intelligenter Zeichenerkennung in dem genannten Bereich.

9. Ein computerlesbares Programmier-Medium mit Anweisungen darauf, die, wenn sie von einem Verarbeitungsmodul ausgeführt werden, das Verfahren gemäß einem der Ansprüche 1 bis 8 implementieren.

10. Eine Vorrichtung zur sicheren Dateneintragung auf einer Schnittstelle eines Terminals, wobei die Vorrichtung Folgendes aufweist:
Mittel zum Implementieren des Verfahrens nach einem der Ansprüche 1 bis 8.

## Revendications

1. Procédé de saisie sécurisée de données par un utilisateur sur un clavier virtuel sur une interface à écran tactile d'un terminal, le terminal étant configuré pour fonctionner dans un mode sécurisé et dans un mode ouvert, le procédé comprenant les étapes consistant à :

recevoir (100) une position d'interaction utilisateur avec l'interface ;
déterminer (409) si des données sécurisées sont entrées pendant l'interaction par l'utilisateur sur l'interface ; dans lequel s'il est déterminé qu'aucune donnée sécurisée n'a été saisie, les étapes consistant à
comparer un compteur à un seuil, N, le compteur indicatif d'un nombre d'interactions dans une transaction utilisateur ; dans lequel si le compteur est supérieur ou égal à N-1 , déterminer (401) qu'une menace de sécurité est possible ;
déterminer (101) si des données sécurisées sont présentes dans une zone autour de la position et si des données sécurisées sont présentes,
incrémenter (108) le compteur;
comparer le compteur au seuil, N; et si le compteur est supérieur ou égal au seuil, N, les étapes consistant à
affirmer (104) une menace de sécurité et envoyer (106) une alerte du mode sécurisé au mode ouvert.

2. Procédé selon la revendication 1,
dans lequel les étapes consistant à déterminer si des données sécurisées sont présentes, incrémenter un compteur, comparer le compteur à un seuil, et affirmer que l'interaction utilisateur comprend une menace de sécurité se produisent lorsque le terminal est dans un mode sécurisé.

3. Procédé selon la revendication 2,
dans lequel le mode sécurisé est un Environnement d'Exécution Sécurisé, TEE et/ou dans lequel le mode ouvert est un Environnement d'Exécution Riche, REE.

4. Procédé selon l'une quelconque des revendications 2 ou 3,
dans lequel l'affirmation que l'interaction utilisateur comprend une menace de sécurité comprend le fait de ne pas prendre en compte (105) la position de l'interaction utilisateur.

5. Procédé selon l'une quelconque des revendications 2 à 4,
dans lequel si aucune donnée sécurisée n'est présente dans la zone autour de la position ou si le compteur est inférieur au seuil, le procédé comprend le passage de la position du mode sécurisé au mode ouvert.

6. Procédé selon l'une quelconque des revendications précédentes comprenant en outre la remise à zéro de la valeur du compteur si aucune donnée sécurisée n'est présente dans la zone autour de la position ou si une menace de sécurité est affirmée.

7. Procédé selon l'une quelconque des revendications précédentes, dans lequel le seuil est égal à un nombre de chiffres d'un numéro d'identification personnel.

8. Procédé selon l'une quelconque des revendications précédentes, dans lequel l'étape consistant à déterminer si des données sécurisées sont présentes dans la zone autour de la position comprend la réalisation d'une reconnaissance intelligente de caractères sur ladite zone.

9. Support de programmation lisible par ordinateur comprenant des instructions qui, lorsqu'elles sont exécutées par un module de traitement, mettent en œuvre le procédé selon l'une quelconque des revendications 1 à 8.

10. Appareil de saisie sécurisée de données sur une interface d'un terminal, l'appareil comprenant :
des moyens pour mettre en œuvre le procédé selon l'une quelconque des revendications 1 à 8.

Terminal

Rich environment

Client Application

which make use of
the TEE Client API

TEE Client API
library implementation

Communications
stack

Trusted environment

Trusted Application

running on top of TEE

TEE

TEE hosting code

Messages

Platform (Hardware / Hypervisor)

**TEE Client API System Architecture**

**Fig. 1**

100

Receiving a position of a user
interaction with the interface.

Counter=counter+1 — 108

101

Determine whether secure data is
present in an area around the
position.

102

Assess a number of interactions, n
previous to the current interaction

Counter>=N    ? — 107

No          Yes

103 — No threat exists

Assert a security threat — 104

Discard the position — 105

Send an alert — 106

**Fig. 2**

(X-Z, Y+T) — top left corner

(X+Z,Y+T) — top right corner

(X,Y) —————————————— 201

(X-Z,Y-T) — bottom left corner

(X+Z,Y+T) — bottom right corner

**Fig. 3**

Power-on Reset — 407

Counter = 0 — 408

Receiving a position of a user
Interaction with the interface — 100

Determine if secure data is
input — 409

Yes

No

Determine whether a threat is
possible ( Counter >= N-1 ? ) — 401

Yes

No

Output Position to
Client Application
REE/Open mode — 402

Determine whether secure data is
present in an area around the
position. — 101

Yes

No — 103

Counter=Counter+1 — 108

Counter >= N-1 — 404

Counter >= N

No

Output Position to
Client Application
REE/Open mode — 403

Yes

Yes

No

Assert a Security Threat — 104

Discard the position — 105

Send an alert — 106

Output position to
Client Application
REE/Open mode — 406

Clear Counter (=0) — 405

**Fig. 4**

**Fig. 5**

**EP 3 370 182 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015213246 A1